(19) Europäisches Patentamt
European Patent Office
Office européen des brevets

(11) Publication number: **0 163 052**
**B1**

(12) # EUROPEAN PATENT SPECIFICATION

(45) Date of publication of patent specification: **19.12.90**

(51) Int. Cl.$^5$: **C 08 L 23/08,** C 08 K 5/54

(21) Application number: **85103810.9**

(22) Date of filing: **29.03.85**

(54) **Polymeric composition.**

(30) Priority: **30.03.84 JP 62941/84**

(43) Date of publication of application:
**04.12.85 Bulletin 85/49**

(45) Publication of the grant of the patent:
**19.12.90 Bulletin 90/51**

(84) Designated Contracting States:
**CH DE FR GB IT LI NL**

(56) References cited:
**EP-A-0 089 243**

**Research Disclosure, August 1973, page 50, 11255 (file pages 46-49)**

(73) Proprietor: **DU PONT-MITSUI POLYCHEMICALS CO.,LTD.**
**2-5, Kasumigaseki 3-chome**
**Chiyoda-ku Tokyo (JP)**

(72) Inventor: **Tada, Seiichi**
**313-2, Kimizuka**
**Ichihara-shi Chiba-ken (JP)**

(74) Representative: **Kraus, Walter, Dr. et al**
**Patentanwälte Kraus, Weisert & Partner**
**Thomas-Wimmer-Ring 15**
**D-8000 München 22 (DE)**

**EP 0 163 052 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a polymeric composition comprising an ethylene/vinyl acetate/carbon monoxide terpolymer and an organosilicon compound. More specifically, it relates to a polymeric composition comprising the aforesaid terpolymer and having improved processability, odor and heat stability.

Generally, ethylenic polymers are nonpolar and have the defect of poor compatibility with other polymers. An ethylene/vinyl acetate/carbon monoxide terpolymer, however, has good compatibility with many polymers containing polar groups such as polyvinyl chloride, polyamides and cellulose derivatives because it has highly polar carbon monoxide units in the molecule (see, for example, U.S. Patent 3,780,140).

In particular, the ethylene/vinyl acetate/carbon monoxide terpolymer is used as a permanent plasticizer instead of conventional liquid plasticizers or as a modifier. The use of this terpolymer as a permanent plasticizer makes most of its characteristics, and can circumvent the changes with time of the rigidity of vinyl chloride resin compositions owing to volatilization or extraction of the liquid plasticizers, and the contamination of substrates by bleed-out of the liquid plasticizers from such vinyl chloride resin compositions, which are the defects of the conventional vinyl chloride resin compositions. Sheets and other articles fabricated from vinyl chloride resin compositions containing the above terpolymer are also used in fields where conventional vinyl chloride resin compositions cannot be satisfactorily applied, for example as pond liners for reservoirs or industrial waste water which require outdoor durability, and cover sheets of electrical appliances which require a high degree of freedom from bleed-out.

The above terpolymer or blends of this polymer with other synthetic resins such as vinyl chloride resins, however, have relatively poor heat stability at high temperatures during kneading or molding or during a crosslinking reaction with organic peroxides or by electron beam irradiation, and this causes the final products to have an irritating odor. This defect is commonly possessed by vinyl acetate-type polymers. Since vinyl acetate units in the above terpolymer are adjacent to carbon monoxide units, the reactivity of the vinyl acetate units is high, and they tend to liberate acetic acid at lower temperatures, and in turn impart an irritating odor to the final products. It is generally known that such a defect is removed by adding magnesium oxide to the terpolymer or polymer composition containing it (Research Disclosure, August 1973, page 50, 11255).

The addition of magnesium oxide is effective for preventing the occurrence of an irritating odor in the products. But during processing, the terpolymer or its composition has poor releasability from the roll surface or has reduced heat stability. For example, in a test of heating at 120°C for 400 hours which is used to evaluate the heat stability of a vehicle sheet, etc. the heat weight loss of a sheet of the terpolymer or its composition containing magnesium oxide has an increased heat weight loss and its discoloration is accelerated. In particular, the poor releasability of the molding compound from the roll surface is serious. Since this defect prevents smooth performance of the processing operation, it constitutes a serious drawback in the kneading and molding process.

Because the aforesaid problems are detrimental to the practical application of the ethylene/vinyl acetate/carbon monoxide terpolymer or a blend of it with another synthetic polymer, it has been strongly desired to improve the processability, odor and heat stability of the aforesaid terpolymer.

It is an object of this invention therefore to provide a novel polymeric composition comprising the ethylene/vinyl acetate/carbon monoxide terpolymer.

Another object of this invention is to provide a polymeric composition comprising the aforesaid terpolymer which has little or no irritating odor.

Still another object of this invention is to provide a polymeric composition comprising the aforesaid terpolymer and having excellent heat stability.

Yet another object of this invention is to provide a polymeric composition comprising the aforesaid terpolymer and having excellent releasability from a roll surface during processing.

A further object of this invention is to provide the use of a polymeric composition having the aforesaid properties as a plasticizer.

A still further object of this invention is to provide a polyvinyl chloride composition containing the aforesaid polymeric composition as a plasticizer.

Additional objects and advantages of this invention will become apparent from the following description.

According to this invention, the above objects and advantages of this invention can be achieved by a polymeric composition comprising an ethylene/vinyl acetate/carbon monoxide terpolymer and an organosilicon compound having in the molecule at least one hydrolyzable hydrocarbon-oxy group directly bonded to a silicon atom.

The ethylene/vinyl acetate/carbon monoxide terpolymer used in this invention is known *per se*, and can be produced, for example, by the method described in U.S. Patent No. 3,780,140.

Preferably, the terpolymer used in this invention consists substantially of 40 to 80% by weight of ethylene units, 15 to 60% by weight of vinyl acetate units and 5 to 30% by weight of carbon monoxide. More preferably, the terpolymer consists substantially of 60 to 70% by weight of ethylene units, 20 to 35% by weight of vinyl acetate units and 5 to 15% by weight of carbon monoxide.

The terpolymer used in this invention includes not only a copolymer composed only of ethylene, vinyl acetate and carbon monoxide, but also those which additionally contain a small amount (for example, not more than 5% by weight) of another monomer, for example (meth)acrylates such as ethyl (meth)acrylate, n-butyl acrylate and glycidyl methacrylate, vinyl esters of carboxylic acids, other than vinyl acetate, such as vinyl propionate, unsaturated carboxylic acids such as acrylic acid, and nitriles such as acrylonitrile and methacrylonitrile.

The organosilicon compound used in the composition of this invention should have at least one hydrolyzable hydrocarbon-oxy group directly bonded to a silicon atom in the molecule. In other words, if the hydrocarbon-oxy group is represented by RO—, the organosilicon compound used in this invention should have at least one RO-Si moiety in the molecule. The hydrocarbon-oxy group is, for example, an alkyloxy or aryloxy group. The alkyl group in the alkoxy group may be linear or branched and may be interrupted by an oxygen atom. Preferably, the alkyloxy group has 1 to 12 carbon atoms, and the aryloxy group has 6 to 18 carbon atoms. Examples of the alkyloxy group include methoxy, ethoxy, n-propoxy, isopropoxy, n-butoxy, iso-butoxy, sec-butoxy, tert-butoxy, n-pentoxy, n-hexoxy, n-octoxy, n-nonanoxy and n-decylkoxy. Examples of the alkyloxy group in which the alkyl group is interrupted by an oxygen atom are 2-methoxyethyloxy and 3-ethoxypropyloxy. Examples of the aryloxy group are phenoxy, methylphenoxy and naphthoxy groups.

Especially preferably, the organosilicon compound has 2 to 4 hydrocarbon-oxy groups directly bonded to the same silicon atom in the molecule.

Examples of the organosilicon compound are as follows:

(A) Compounds of the following formula

$$Si(OR^1)_4$$

wherein the four $R^1$ groups may be identical or different, and each represents an alkyl group which may be interrupted by an oxygen atom, or an aryl group.

Specific examples include ortho-methyl silicate, ortho-ethyl silicate, ortho-n-propyl silicate, ortho-n-butyl silicate, ortho-isoamyl silicate and ortho-trimethylmonophenyl silicate.

(B) Compounds of the following formula

$$(R^3 \rightarrow_n Si \leftarrow OR^2)_{4-n}$$

wherein n is 1, 2 or 3, $R^2$ groups may be identical or different and each represents an alkyl group which may be interrupted by an oxygen atom, or an aryl group, and $R^3$ groups may be identical or different and each represents an alyl, alkenyl or aryl group.

Specific examples include methyltrimethyoxysilane, ethyltrimethoxysilane, phenyltrimethoxysilane, dimethyldimethoxysilane, diethyldiethoxysilane, diphenyldimethoxysilane, trimethylmonomethoxysilane and triethylmonoethoxysilane.

(C) Compounds of the following formula

$$X \leftarrow CH_2 \rightarrow_q SiR^5_m(OR^4)_{3-m}$$

wherein $R^4$ groups may be identical or different and each represents an alkyl group which may be interrupted by an oxygen atom, or an aryl group, $R^5$ represents an alkyl group having 1 to 8 carbon atoms, X represents an acryloxy, methacryloxy, glycidoxy or 3,4-epoxycyclohexyl group or a substituted or unsubstituted amino group, q is 2 or 3, and m is 0 or 1.

Preferably, these compounds have a boiling point of at least 200°C, and include, for example, gamma-methacryloxypropyltrimethoxysilane, gamma-glycidoxypropyltrimethoxysilane, gamma-glycidoxypropylmonoethyldiethoxysilane, N-(beta-aminoethyl)-gamma-aminopropyltrimethoxysilane, N-(beta-aminoethyl)-gamma-aminopropylmonomethyldimethoxysilane, gamma-aminopropyltriethoxysilane, N-phenyl-gamma-aminopropyltrimethoxysilane, and beta-(3,4-epoxycyclohexyl)ethyltrimethoxysilane.

(D) Compounds of the following formula

$$CH_2=CH—Si(OR^5)_3$$

wherein $R^5$ groups may be identical or different, and each represents an alkyl group which may be interrupted by an oxygen atom, or an aryl group.

Specific examples include vinyl tri(beta-methoxyethoxy)silane, vinyltrimethoxysilane and vinyltriethoxysilane.

(E) Condensation products of the compounds (A) to (D) above which contain at least one alkoxy group in the molecule.

The organosilicon compound is used in a proportion of, for example, 0.2 to 10 parts by weight, preferably 1 to 5 parts by weight, per 100 parts by weight of the terpolymer. If the organosilicon compound is used in smaller proportions, the desired effect of inhibiting an irritating odor is difficult to obtain. If it is

used in large proportions, the resulting polymeric composition decreases in viscosity and its processability is reduced. Alternatively, the organosilicon compound tends to bleed out on the surface of the molded article and become sticky.

The terpolymer is blended with other plastic resins having compatibility with it, such as halogenated polymers, polyamides and cellulose derivatives, particularly vinyl chloride resins, and are used as a permanent plasticizer for these synthetic resins. The polymeric composition of this invention can equally be used as a plasticizer. The present invention thus also provides a polymeric composition comprising the aforesaid terpolymer, the aforesaid organosilicon compound and another plastic resin having compatibility with the terpolymer.

Vinyl chloride resins are especially preferred as the other plastic resin. Not only a homopolymer of vinyl chloride, but also copolymers of vinyl chloride with comonomers can be used as the vinyl chloride resins. Examples of the copolymer include alpha-olefins such as ethylene and propylene, vinyl esters such as vinyl acetate, unsaturated carboxylic acid esters such as acrylic esters, vinyl ethers such as alkylvinyl ethers, other vinyl halides such as vinyl bromide and vinyl flouride, and other compounds such as styrene, acrylonitrile and vinylidene chloride.

As required, liquid plasticizers may be incorporated in the vinyl chloride resins.

The polymeric composition containing the plastic resin may be prepared by simultaneously or successively dry-blending or melt-blending the aforesaid ingredients.

In the case of successive blending, it is possible to prepare the polymeric composition of the invention consisting substantially of the terpolymer and the organosilicon compound and then blending it with the plastic resin. Irrespective of whether the blending is carried out successively or simultaneously, the resulting polymeric compositions show much the same properties.

When the individual ingredients are dry-blended, the organosilicon compound is easily melt-blended uniformly when subsequently the aforesaid terpolymer with or without the other plastic resin is melted in a roll, an extruder, etc. Melt-blending of the individual ingredients may be carried out in various types of mixers, rollers and kneaders such as a single-screw extruder, a twin-screw extruder or a Banbury mixer. There is no particular restriction on the sequence of mixing these ingredients.

The polymeric composition of this invention containing the plastic resin shows the following marked advantages.

(1) A terpolymer compositions prepared by adding magnesium oxide has poor releasability from the roll surface during kneading and molding. In contrast, the polymer composition of this invention exhibits good releasability from the roll surface.

(2) The irritating odor of molded articles, such as films or sheets, from the terpolymer or a blend of it with another plastic polymer, described above, is due presumably to acetic acid which is generated by the heat decomposition of the vinyl acetate units of the terpolymer when it is heated at high tempeatures, for instance during kneading or molding. It is believed that in the polymer composition of this invention, acetic acid is captured by the organosilicon compound, and therefore, the final product does not have an irritating odor ascribable to acetic acid.

(3) The terpolymer composition containing magnesium oxide gives a product having much reduced aging resistance, and the product undergoes accelerated discoloration and has a high weight loss. In contrast, the inclusion of the specific organosilicon compound in the polymer composition of this invention serves to obviate the reduction of the aging resistance of the product.

Thus, the polymer composition of this invention shows improved releasability, processability, heat resistance and aging resistance and the freedom from an irritating odor without particularly showing a side effect by the addition of the organosilicon compound.

It is the general practice to improve the mechanical properties and anti-blocking property at high temperatures of the aforesaid terpolymer or a composition comprising it and another plastic resin by crosslinking them with organic peroxides or by electron beam irradiation. At this time, too, the organosilicon compound in the polymeric composition of this invention can advantageously capture acetic acid liberated during the crosslinking reaction at high temperatures.

The following examples illustrate the present invention in more detail.

## Examples 1—4

In each run, a polymer composition having the following formulation was prepared molded into a sheet. The properties of the composition and the sheet were evaluated in accordance with the methods shown below. The results are shown in Table 1.

| | (parts by weight) |
|---|---|
| Polyvinyl chloride (average degree of polymerisation 1000) | 100 |
| Ethylene/vinyl acetate/carbon monoxide terpolymer (ethylene units 66 weight %, vinyl acetate units 24 weight % and carbon monoxide units 10 weight%; melt index 35 g/10 minutes) | 100 |
| Organsilicon compound (see Table 1) | 0.2 |
| Ba-Zn stabiliser | 2.5 |
| Phosphite ester | 0.5 |
| Epoxidized soybean oil | 5 |
| Phenolic antioxidant | 0.3 |

Methods of measurement and evaluation

Roll releasability: The composition was kneaded at 165°C on a 15.24 cm (6 inch) roll, and the time which elapsed until the kneaded mixture could no longer be removed from the roll surface was measured. Longer periods of time indicate better releasability.

Smoothness of the sheet surface: The roll sheet sampled 10 minutes after the initiation of kneading was evaluated by visual observation.

Irritating odor: Five grams of the sheet was sealed up in a 200 ml glass bottle, and heated at 100°C for 4 hours. The bottle was then opened, and the presence of an irritating odor was examined.

Discoloration (ΔE): The sheet was heated to 120°C for 1 week, and the degree of it discoloration was examined by using a color difference meter (Color Computer Model SM-2 made by Suga Testing Machine Co., Ltd.).

Heat weight loss: The sheet was heated at 120°C for 400 hours, and then the change of the weight of the sheet was examined.

## Comparative Example 1

The procedure of Examples 1 to 4 was repeated except that the organosilicon compound was not used. The results are shown in Table 1.

## Comparative Example 2

The procedure of Examples 1 to 6 was repeated except that 1 part by weight of magnesium oxide was used instead of the organosilicon compound. The results are also shown in Table 1.

TABLE 1

| Example (Ex.) or Comparative Example (CEx.) | Organosilicon compound | Roll releasability (min.) | Smoothness of the sheet | Irritating odor | Discoloration ($\Delta E$) | Heat weight loss (%) |
|---|---|---|---|---|---|---|
| Ex. 1 | ortho-ethyl silicate | 60 | Good | NO | 27 | 3.2 |
| Ex. 2 | ortho-isopropyl silicate | 50 | Good | No | 25 | 3.6 |
| Ex. 3 | Ethyl silicate condensate (40% as $SiO_2$) | 50 | Good | No | 27 | 3.3 |
| Ex. 4 | vinyl tris(beta-methoxy-ethoxy)silane | 55 | Good | No | 25 | 3.6 |
| CEx. 1 | None | 60 | Good | Yes | 26 | 3.5 |
| CEx. 2 | MgO | 15 | Poor | No | 63 (blackening ocurred) | 5.1 |

Example 5

Compositions were prepared as in Example 1 by changing the amount of ortho-ethyl silicate to 1, 2 and 5 parts by weight, respectively. Roll sheets obtained by roll kneading were evaluated for their surface stickiness and irritating odor. All of the sheets tested were found to be free from an irritating odor and stickiness.

Examples 6—7 and Comparative Example 3

Two parts by weight of each of the organosilicon compounds shown in Table 2 was added to 100 parts by weight of the same ethylene/vinyl acetate/carbon monoxide terpolymer as used in Examples 1 to 5, and the mixture was kneaded by a Brabender plastograph at a temperature of 160°C and a rotor rotating speed of 50 rpm for 10 minutes. The resulting kneaded mixture was examined for an irritating odor. The results are shown in Table 2.

TABLE 2

| Example | Organsilicon compound | Irritating odor |
|---|---|---|
| 6 | Methyl silicate condensate (SiO content 50%) | No |
| 7 | gamma-Glycidoxypropyl-trimethoxysilane | No |
| Comparative Ex. 3 | (None) | Yes |

**Claims**

1. A polymeric composition comprising an ethylene/vinyl acetate/carbon monoxide terpolymer and an organosilicon compound having in the molecule at least one hydrolyzable hydrocarbon-oxy group directly bonded to a silicon atom.

2. The composition of claim 1 wherein the terpolymer consists substantially of 40 to 80% by weight of ethylene units, 15 to 60% by weight of vinyl acetate units and 5 to 30% by weight of carbon monoxide units.

3. The composition of claim 1 wherein the hydrocarbon-oxy group of the organosilicon compound is an alkyloxy group in which the alkyl may be interrupted by an oxygen atom, or an aryloxy group.

4. The composition of claim 1 wherein the organosilicon compound has 2 to 4 hydrocarbon-oxy groups directly bonded to the same silicon atom in the molecule.

5. The composition of claim 1 wherein the organosilicon compound is a compound represented by the following formula

$$Si(OR^1)_4$$

wherein the four $R^1$ groups may be identical or different, and each represents an alkyl group which may be interrupted by an oxygen atom, or an aryl group.

6. The composition of claim 1 wherein the organosilicon compound is a compound represented by the following formula

$$(R^3)_n-Si-(OR^2)_{4-n}$$

wherein n is 1, 2 or 3, $R^2$ groups may be identical or different and each represents an alkyl group which may be interrupted by an oxygen atom, or an aryl group, and $R^3$ groups may be identical or different and each represents an alkyl, alkenyl or aryl group.

7. The composition of claim 1 wherein the organosilicon compound is a compound represented by the following formula

$$X-(CH_2)_q-SiR^5_m(OR^4)_{3-m}$$

wherein $R^4$ groups may be identical or different and each represents an alkyl group which may be interrupted by an oxygen atom, or an aryl group, $R^5$ represents an alkyl group having 1 to 8 carbon atoms, X represents an acryloxy, methacryloxy, glycidoxy or 3,4-epoxycyclohexyl group or a substituted or unsubstituted amino group, q is 2 or 3, and m is 0 or 1.

8. The composition of claim 1 wherein the organosilicon compound is a compound represented by the following formula

$$CH_2=CH-Si(OR^5)_3$$

wherein $R^6$ groups may be identical or different, and each represents an alkyl group which may be interrupted by an oxygen atom, or an aryl group.

9. A polymeric composition comprising an ethylene/vinyl acetate/carbon monoxide terpolymer, an organosilicon compound having in the molecule at least one hydrolyzable hydrocarbon-oxy group directly bonded to a silicon atom, and another plastic polymer having compatibility with the terpolymer.

10. The composition of claim 1 wherein the other plastic polymer is a vinyl chloride-type polymer.

11. The composition of claim 9 wherein the terpolymer consists substantially of 40 to 80% by weight of ethylene units, 15 to 60% by weight of vinyl acetate units and 5 to 30% by weight of carbon monoxide units.

12. The composition of claim 9 wherein the hydrocarbon-oxy group of the organosilicon compound is an alkyloxy group in which alkyl may be interrupted by an oxygen atom, or an aryloxy group.

13. The composition of claim 9 wherein the organosilicon compound has 2 to 4 hydrocarbon-oxy groups directly bonded to the same silicon atom in the molecule.

14. The composition of claim 9 wherein the organosilicon compound is a compound represented by the following formula

$$Si(OR^1)_4$$

wherein the four $R^1$ groups may be identical or different, and each represents an alkyl group which may be interrupted by an oxygen atom, or an aryl group.

15. The composition of claim 9 wherein the organosilicon compound is a compound represented by the following formula

$$(R^3)_n Si (OR^2)_{4-n}$$

wherein n is 1, 2 or 3, $R^2$ groups may be identical or different and each represents an alkyl group which may be interrupted by an oxygen atom, or an aryl group, and $R^3$ groups may be identical or different and each represents an alkyl, alkenyl or aryl group.

16. The composition of claim 9 wherein the organosilicon compound is a compound represented by the following formula

$$X(CH_2)_q SiR^5_m(OR^4)_{3-m}$$

wherein $R^4$ groups may be identical or different and each represents an alkyl group which may be interrupted by an oxygen atom, or an aryl group, $R^5$ represents an alkyl group having 1 to 8 carbon atoms, X represents an acryloxy, methacryloxy, glycidoxy or 3,4-epoxycyclohexyl group or a substituted or unsubstituted amino group, q is 2 or 3, and m is 0 or 1.

17. The composition of claim 9 wherein the organosilicon compound is a compound represented by the following formula

$$CH_2=CH-Si(OR^5)_3$$

wherein $R^5$ groups may be identical or different, and each represents an alkyl group which may be interrupted by an oxygen atom, or an aryl group.

**Patentansprüche**

1. Polymere Zusammensetzung, dadurch gekennzeichnet, daß sie ein Ethylen/Vinylacetat/Kohlenmonoxid-Terpolymeres und eine Organosiliciumverbindung, die im Molekül mindestens eine hydrolysierbare Kohlenwasserstoffoxy-Gruppe in direkter Bindung an das Siliciumatom enthält, umfaßt.

2. Zusammensetzung nach Anspruch 1, dadurch gekennzeichnet, daß das Terpolymere im wesentlichen aus 40 bis 80 Gew.% Ethyleneinheiten, 15 bis 60 Gew.% Vinylacetateinheiten und 5 bis 30 Gew.% Kohlenmonoxideinheiten besteht.

3. Zusammensetzung nach Anspruch 1, dadurch gekennzeichnet, daß die Kohlenwasserstoffoxy-Gruppe der Organosiliciumverbindung eine Alkyloxygruppe, worin das Alkyl durch ein Sauerstoffatom unterbrochen sein kann, oder eine Aryloxygruppe ist.

4. Zusammensetzung nach Anspruch 1, dadurch gekennzeichnet, daß die Organosiliciumverbindung 2 bis 4 Kohlenwasserstoffoxy-Gruppen in direktor Bindung an das gleiche Siliciumatom in dem Molekül besitzt.

5. Zusammensetzung nach Anspruch 1, dadurch gekennzeichnet, daß die Organsilicumverbindung eine Verbindung, wiedergegeben durch die folgende Formel

$$Si(OR^1)_4$$

ist, worin die vier $R^1$-Gruppen gleich oder verschieden sein können und jeweils für eine Alkylgruppe, die durch ein Sauerstoffatom unterbrochen sein kann, oder eine Arylgruppe stehen.

6. Zusammensetzung nach Anspruch 1, dadurch gekennzeichnet, daß die Organosiliciumverbindung eine Verbindung, wiedergegeben durch die folgende Formel

$$(R^3)_n Si(OR^2)_{4-n}$$

ist, worin n für 1, 2 oder 3 steht, die $R^2$-Gruppen gleich oder verschieden sein können und jeweils für eine Alkylgruppe, die durch ein Sauerstoffatom unterbrocken sein kann, oder eine Arylgruppe stehen und die $R^3$-Gruppen gleich oder verschieden sein können und jeweils für eine Alkyl-, Alkenyl- oder Aryl-Gruppe stehen.

7. Zusammensetzung nach Anspruch 1, dadurch gekennzeichnet, daß die Organosiliciumverbindung eine Verbindung, wiedergegeben durch die folgende Formel

$$X(CH_2)_q SiR^5_m(OR^4)_{3-m}$$

ist, worin die $R^4$-Gruppen gleich oder verschieden sein könen und jeweils für eine Alkylgruppe, die durch ein Sauerstoffatom unterbrochen sein kann, oder eine Arylgruppe stehen, $R^5$ für eine Alkylgruppe mit 1 bis 8 Kohlenstoffatomen steht, X für eine Acryloxy- Methacryloxy-, Glycidoxy- oder 3,4-Epoxycyclohexyl-Gruppe oder eine substituierte oder unsubstituierte Aminogruppe steht, q für 2 oder 3 steht und m für 0 oder 1 steht.

8. Zusammensetzung nach Anspruch 1, dadurch gekennzeichnet, daß die Organosiliciumverbindung eine Verbindung, wiedergegeben durch die folgende Formel

$$CH_2{=}CH{-}Si(OR^5)_3$$

ist, worin die $R^5$-Gruppen gleich oder verschieden sein können und jeweils für eine Alkylgruppe, die durch ein Sauerstoffatom unterbrocken sein kann, oder eine Arylgruppe stehen.

9. Polymere Zusammensetzung, dadurch gekennzeichnet, daß sie ein Ethylen/Vinylacetat/Kohlenmonoxid-Terpolymeres einer Oraganosiliciumverbindung, die im Molekül mindestens eine hydrolisierbare Kohlenwasserstoffoxy-Gruppe in direkter Bindung an das Siliciumatom besitzt, und ein weiters Kunstoffpolymeres, das mit dem Terpolymeren verträglich ist, umfaßt.

10. Zusammensetzung nach Anspruch 1, dadurch gekennzeichnet, daß das weitere Kunstoffpolymere ein Polymeres vom Vinylchloridtyp ist.

11. Zusammensetzung nach Anspruch 9, dadurch gekennzeichnet, daß das Terpolymere im wesentlichen aus 40 bis 80 Gew.% Ethyleneinheiten, 15 bis 60 Gew.% Vinylacetateinheiten und 5 bis 30 Gew.% Kohlenmonoxideinheiten besteht.

12. Zusammensetzung nach Anspruch 9, dadurch gekennzeichnet, daß die Kohlenwasserstoffoxy-Gruppe der Organosiliciumverbindung eine Alkyloxygruppe, worin das Alkyl durch ein Sauerstoffatom unterbrochen sein kann, oder eine Aryloxygruppe ist.

13. Zusammensetzung nach Anspruch 9, dadurch gekennzeichnet, daß Organosiliciumverbindung 2 bis 4 Kohlenwasserstoffoxy-Gruppen in direktor Bindung an das gleiche Siliciumatom in dem Molekül besitzt.

14. Zusammensetzung nach Anspruch 9, dadurch gekennzeichnet, daß die Organsilicumverbindung eine Verbindung, wiedergegeben durch die folgende Formel

$$Si(OR^1)_4$$

ist, worin die vier $R^1$-Gruppen gleich oder verschieden sein können und jeweils für eine Alkylgruppe, die durch ein Sauerstoffatom unterbrochen sein kann, oder eine Arylgruppe stehen.

15. Zusammensetzung nach Anspruch 9, dadurch gekennzeichnet, daß die Organosiliciumverbindung eine Verbindung, wiedergegeben durch die folgende Formel

$$(R^3)_n Si(OR^2)_{4-n}$$

ist, worin n für 1, 2 oder 3 steht, die $R^2$-Gruppen gleich oder verschieden sein können und jeweils für eine Alkylgruppe, die durch ein Sauerstoffatom unterbrochen sein kann, oder eine Arylgruppe stehen und die $R^3$-Gruppen gleich oder verschieden sein können und jeweils für eine Alkyl-, Alkenyl- oder Aryl-Gruppe stehen.

16. Zusammensetzung nach Anspruch 9, dadurch gekennzeichnet, daß die Organosiliciumverbindung eine Verbindung, wiedergegeben durch die folgende Formel

$$X{-}(CH_2)_q{-}SiR^5_m(OR^4)_{3-m}$$

ist, worin die $R^4$-Gruppen gleich oder verschieden sein könen und jeweils für eine Alkylgruppe, die durch ein Sauerstoffatom unterbrochen sein kann, oder eine Arylgruppe stehen, $R^5$ für einee Alkylgruppe mit 1 bis 8 Kohlenstoffatomen steht, X für eine Acryloxy- Methacryloxy-, Glycidoxy- oder 3,4-Epoxycyclohexyl-Gruppe oder eine substituierte oder unsubstituierte Aminogruppe steht, q für 2 oder 3 steht und m für 0 oder 1 steht.

17. Zusammensetzung nach Anspruch 9, dadurch gekennzeichnet, daß die Organosiliciumverbindung eine Verbindung, wiedergegeben durch die folgende Formel

$$CH_2{=}CH{-}Si(OR^5)_3$$

ist, worin die $R^5$-Gruppen gleich oder verschieden sein können und jeweils für eine Alkylgruppe, die durch ein Sauerstoffatom unterbrochen sein kann, oder eine Arylgruppe stehen.

**Revendications**

1. Composition polymère comprenant un terpolymère éthylène/acétate de vinyl/oxyde de carbone et un composé organosilicié dont la molécule contient au moins un groupe hydrocarbure-oxy hydrolysable lié directement à un atome de silicium.

2. Composition selon la revendication 1, dans laquelle le terpolymère est sensiblement constitué de 40 à 80% en poids de motifs d'éthylène, 15 à 60% en poids de motifs d'acétate de vinyle et 5 à 30% en poids de motifs d'oxyde de carbone.

3. Composition selon la revendication 1, dans laquelle le groupe hydrocarbure-oxy du composé organosilicié est un groupe alkyloxy dont le groupe alkyle peut être interrompu par un atome d'oxygène, ou un groupe aryloxy.

4. Composition selon la revendication 1, dans laquelle le composé organosilicié contient 2 à 4 groupes hydrocarbure-oxy directement liés au même atome de silicium dans la molécule.

5. Composition selon la revendication 1, dans laquelle le composé organosilicié est un composé représenté par la formule suivante:

$$Si(OR^1)_4$$

dans laquelle les quatre groupes $R^1$ peuvent être identiques ou différents et représentent chacun un groupe alkyle qui peut être interrompu par un atome d'oxygène, ou un groupe aryle.

6. Composition selon la revendication 1, dans laquelle le composé organosilicié est un composé représenté par la formule suivante:

$$(R^3)_n{-}Si{-}(OR^2)_{4-n}$$

dans laquelle n est 1, 2 ou 3, les groupes $R^2$ peuvent être identiques ou différents et représentent chacun un groupe alkyle qui peut être interrompu par un atome d'oxygène, ou un groupe aryle, et les groupes $R^3$ peuvent être identiques ou différents et représentent chacun un groupe alkyle, alcényle ou aryle.

7. Composition selon la revendication 1, dans laquelle le composé organosilicié est un composé représenté par la formule suivante:

$$X{-}(CH_2)_q{-}SiR^5_m(OR^4)_{3-m}$$

dans laquelle les groupes $R^4$ peuvent être identiques ou différents et représentent chacun un groupe alkyle qui peut être interrompu par un atome d'oxygène, ou un groupe aryle, $R^5$ représente un groupe alkyle ayant 1 à 8 atomes de carbone, X représente un groupe acryloxy, méthacryloxy, glycidoxy ou 3,4-époxy-cyclohexyle ou un groupe amino substitué ou non substitué, q est 2 ou 3, et m est 0 ou 1.

8. Composition selon la revendication 1, dans laquelle le composé organosilicié est un composé représenté par la formule suivante:

$$CH_2{=}CH{-}Si(OR^5)_3$$

dans laquelle les groupes $R^5$ peuvent être identiques ou différents et représentent chacun un groupe alkyle qui peut être interrompu par un atome d'oxygène, ou un groupe aryle.

9. Composition polymère comprenant un terpolymère éthylènè/acétate de vinyle/oxyde de carbone, un composé organosilicié dont la molécule contient au moins un groupe hydrocarbure-oxy hydrolysable lié

directement à un atome de silicium, et un autre polymère plastique compatible avec le terpolymère.

10. Composition selon la revendication 1, dans laquelle l'autre polymère platique est un polymère du type chlorure de vinyle.

11. Composition selon la revendication 9, dans laquelle le terpolymère est sensiblement constitué de 40 à 80% en poids de motifs d'éthylène, 15 à 60% en poids de motifs d'acétate de vinyle et 5 à 30% en poids de motifs d'oxyde de carbone.

12. Composition selon la revendication 9, dans laquelle le groupe hydrocarbure-oxy due composé organosilicié est un groupe alkyloxy dont le groupe alkyle peut être interrompu par un atome d'oxygène, ou un groupe aryloxy.

13. Composition selon la revendication 9, dans laquelle le composé organosilicié contient 2 à 4 groupes hydrocarbure-oxy directement liés au même atome de silicium dans la molécule.

14. Composition selon la revendication 9, dans laquelle le composé organosilicié est un composé représenté par la formule suivante:

$$Si(OR^1)_4$$

dans laquelle les quatre groupes $R^1$ peuvent être identiques ou différents et représentent chacun un groupe alkyle qui peut être interrompu par un atome d'oxygène, ou un groupe aryle.

15. Composition selon la revendication 9, dans laquelle le composé organosilicié est un composé représenté par la formule suivante:

$$(R^3 \rightarrow_n Si \leftarrow OR^2)_{4-n}$$

dans laquelle n est 1, 2 ou 3, les groupes $R^2$ peuvent être identiques ou différents et représentent chacun un groupe alkyle qui peut être interrompu par un atome d'oxygène, ou un groupe aryle, et les groupes $R^3$ peuvent être identiques ou différents et représentent chacun un groupe alkyle, alcényle ou aryle.

16. Composition selon la revendication 9, dans laquelle le composé organosilicié est un composé représenté par la formule suivante:

$$X \leftarrow CH_2 \rightarrow_q SiR^5_m(OR^4)_{3-m}$$

dans laquelle les groupes $R^4$ peuvent être identiques ou différents et représentent chacun un groupe alkyle qui peut être interrompu par un atome d'oxygène, ou un groupe aryle, $R^5$ représente un groupe alkyle ayant 1 à 8 atomes de carbone, X représente un groupe acryloxy, méthacryloxy, glycidoxy ou 3,4-époxycyclohexyle ou un groupe amino substitué ou non substitué, q est 2 ou 3, et m est 0 ou 1.

17. Composition selon la revendication 9, dans laquelle le composé organosilicié est un composé représenté par la formule suivante:

$$CH_2{=}CH{-}Si(OR^5)_3$$

dans laquelle les groupes $R^5$ peuvent être identiques ou différents et représentent chacun un groupe alkyle qui peut être interrompu par un atome d'oxygène, ou un groupe aryle.